# EUROPÄISCHE PATENTSCHRIFT

(11) **EP 0 442 993 B1**
(45) Veröffentlichungstag und Bekanntmachung des Hinweises auf die Patenterteilung: **17.08.1994**
(21) Anmeldenummer: 90912812.6
(22) Anmeldetag: 08.09.1990
(51) Int. Cl.: B60T 8/36, F16K 47/02

(54) **VENTIL, INSBESONDERE FÜR SCHLUPFGEREGELTE HYDRAULISCHE BREMSANLAGEN**
VALVE, ESPECIALLY FOR SLIP-CONTROLLED HYDRAULIC BRAKE SYSTEMS
SOUPAPE, NOTAMMENT POUR SYSTEMES DE FREINAGE HYDRAULIQUES A REGLAGE DU GLISSEMENT

(30) Priorität: 14.09.1989 DE 3930757
(43) Veröffentlichungstag der Anmeldung: 28.08.1991
(73) Patentinhaber: ITT Automotive Europe GmbH, 60488 Frankfurt (DE)
(72) Erfinder: BECK, Erhard, D-6290 Weilburg (DE); SCHWEIGHÖFER, Bernd, D-6384 Schmitten (DE); KORNEMANN, Horst, D-6000 Frankfurt am Main 1 (DE)
(86) Internationale Anmeldenummer: EP9001520
(87) Internationale Veröffentlichungsnummer: WO9104181

(56) Entgegenhaltungen:
- DE-A- 1 815 339
- DE-A- 2 052 307
- DE-A- 2 625 961
- FR-A- 2 276 522
- US-A- 3 354 898
- US-A- 3 782 412

## Beschreibung

Die Erfindung betrifft ein Ventil, insbesondere für schlupfgeregelte hydraulische Bremsanlagen nach dem Oberbegriff des Anspruchs 1.

Derartige konventionelle, hinreichend bekannte Ventile zur Durchflußsteuerung von Fluiden bei schlupfgeregelten hydraulischen Bremsanlagen finden vielfältige praktische Verwendung.

Aus der DE 37 01 019 A1 sind bereits Ventile für eine schlupfgeregelte, hydraulische Bremsanlage offenbart, jeweils bestehend aus einem einen Ventilstößel aufnehmenden Ventilsitz, wobei der Ventilstößel über einen Elektromagneten erregbar und in einem Ventilgehäuse axial beweglich geführt ist, sowie mit einem zwischen dem Ventilstößel und dem Ventilsitz steuerbar angeordneten, ringförmigen Strömungsquerschnitt, der mit den das Ventilgehäuse durchdringenden Druckmittelkanälen in Verbindung steht. Zur Steuerung sämtlicher Bremskreise sind auf vorteilhafte Weise mehrere Ventile in einem Ventilblockgehäuse zusammengefaßt, so daß auf rationelle, kostengünstige Weise eine platzsparende Positionierung jedes Ventils gegeben ist.

Weniger vorteilhaft anzusehen ist bei der bekannten Ventilausführung das Geräuschverhalten des Ventils während den Ventilschaltphasen, das auf die Ursache der Grenzschichtablösung am hydraulisch umströmten Ventilschließglied zurückzuführen ist sowie auf die daraus resultierenden Radialschwingungen bzw. die Radialkontaktierung des Ventilstößels am Ventilsitz in Folge instabiler Strömung.

Um die Geräuschentwicklungen und damit die Übertragung von Körperschall zu mindern, werden zur Zeit erhebliche passive wie auch aktive Geräuschdämpfungsmaßnahmen getroffen, die jedoch alle mit erheblichen Kosten und mit mehr oder minder befriedigenden Ergebnissen verbunden sind.

Aus der Druckschrift US-A-3,782,412 ist bereits ein Ventil bekannt, das zum Zwecke der Druckentlastung in einer angeschlossenen hydraulischen Anlage mit einem einstellbaren federbelasteten Ventilkolben versehen ist. Der Ventilkolben ist an seiner Mantelfläche mit mehreren asymmetrisch verteilten Abplattungen versehen, so daß beim Erreichen eines definierten Ventilöffnungsdrucks das zwischen den Abplattungen und der Gehäusebohrung einströmende Fluid eine Querverlagerung des Ventilkolbens verursacht, die abhängig von der Größe der hydraulischen Druckkräfte, der beaufschlagten Fläche und der Wandreibung zu einer gedämpften Hubbewegung des Ventilkolbens führt. Eine in der Schließstellung den Ventilkolben gegenüber dem Ventilsitz zentrierende Aufnahme ist nicht vorgesehen, so daß der Ventilkolben unterschiedliche Schließstellungen bzw. Radialversätze aufweist.

Weiterhin geht aus der DE-A-20 52 307 ein elektromagnetisch betätigtes Sitzventil hervor. Zur Vermeidung des Verkantens, hervorgerufen durch ein Versatz des Ventilschließgliedes gegenüber dem Ventilsitz, ist der Magnetanker gelenkig am Ventilschließglied befestigt und der Ventilsitz mit einer konischen Zentrierung versehen. Die rasche Zentrierung des Ventilschließgliedes gegenüber dem Ventilsitz wird durch die kardanische Lagerung des Ventilstößels am Magnetanker begünstigt, indem bei einem ungewollten Hubversatz des Ventilschließgliedes gegenüber dem Ventilsitz keine Querkraftübertragung infolge des Kardangelenkes auf den Magnetanker einwirkt. Der Magnetanker bleibt damit von einer unerwünschten Querverlagerung im Gehäuse verschont.

Daher ist es die Aufgabe der Erfindung, ein mit einer Selbstzentrierung des Ventilschließgliedes versehenes Ventil dahingehend zu verbessern, daß bei gleichzeitiger Gewährleistung der Funktionssicherheit und Steuerungscharakteristik bei unterschiedlicher Viscosität der Flüssigkeit eine maßgebliche Reduzierung des Geräuschs während der Ventilschaltphasen erzielt wird.

Erfindungsgemäß wird die gestellte Aufgabe durch die den Patentanspruch 1 kennzeichnenden Merkmale gelöst, wonach der Ventilstößel gegenüber dem Ventilsitz unter Einwirkung einer Querkraft definierter Größe derart verlagerbar ist, daß ein Strömungsquerschnitt mit einer asymmetrischen Durchtrittsfläche gebildet ist, wobei an einem von einer Ventilfeder belasteten Schaftende des Ventilstößels ein das Ventilschließglied aufnehmender Stößelkopf angebracht ist, der am Umfang asymmetrisch angeordnete Führungsflächen aufweist, die von nutförmigen Ausnehmungen unterbrochen sind, wobei sich die nutförmigen Ausnehmungen zwischen den Führungsflächen am Stößelkopf axial erstrecken, so daß zur Erzeugung einer Druckkraftresultierenden das Fluid die asymmetrische Durchtrittsfläche am Stößelkopf durchströmt.

Dadurch ist ein Ventil geschaffen, das eine erhebliche Reduzierung der Lärmquelle ermöglicht, ohne die Herstellungskosten unverhältnismäßig hoch ansteigen zu lassen sowie die Steuerungsgüte des Ventils nachhaltig zu beeinträchtigen.

Eine erhebliche kostenminimierte Herstellung des Ventilstößels im Bereich des Stößelkopfes ist durch die asymmetrische Anordnung der die Durchtrittsfläche bestimmenden, sich axial erstreckenden Ausnehmungen gegeben, da beispielsweise anstatt der symmetrischen Verteilung von vier nutförmigen Ausnehmungen über den Umfang lediglich zwei Ausnehmungen größerer Weite an einem Abschnitt des Stößelkopfes vorgesehen sind. Der Fertigungsvorgang ist hierdurch vereinfacht.

Durch eine hohlkehlenförmige Ausbildung der die Ausnehmungen am Stößelkopf bildenden Nuten wird ein bauteilspannungsminimierter sowie strömungsoptimierter Ventilstößel geschaffen, der unter Einwirkung von radialen Druckkräften eine exzentrische Lage einnimmt.

Um eine leckagefreie Abdichtung des Ventilschließgliedes am Ventilsitz zu ermöglichen, sieht die Ausgestaltung des Erfindungsgegenstandes vor, das Ventilschließglied als Kugelsitzventil auszuführen.

Besonders geeignet erscheint unter Bezugnahme auf die zuvor beschriebene Ausführung des Ventilschließgliedes die das Umschlagverhalten der Strömung von laminar in turbulent beeinflussende Oberflächengestalt der Kugel, so daß zum Zwecke einer turbulenten Grenzschichtausbildung ein rascher Strömungsumschlag und somit nur eine kurze laminare Strömungslaufstrecke am umströmten Ventilschließglied verbleibt.

Durch das rasche Überführen der Strömung in den Turbulenzbereich, beispielsweise durch kraterförmige Störfelder auf der Oberfläche des Ventilschließgliedes ist auf vorteilhafte Weise eine Verlagerung der Ablösestelle weit stromabwärts gegeben.

Das Ventilschließglied ist am Ventilsitz zum Zwecke einer optimalen Dichtwirkung nur mit einer schmalen Dichtringzone hoher Oberflächengüte versehen, so daß von Passungs- und Lagetoleranzen weitgehend unabhängig eine leckagefreie Ventilsitzkontaktierung sichergestellt ist.

Weitere Merkmale, Vorteile und Anwendungsmöglichkeiten gehen aus den Unteransprüchen und den nachfolgend beschriebenen erfindungsgemäßen Ausführungsformen hervor.

Es zeigt:
- Figur 1: eine Gesamtansicht mit Längsschnitt der erfindungsgemäßen Ausführungsform,
- Figur 2: einen Querschnitt an der Stelle B-B des Ventils nach Figur 1.

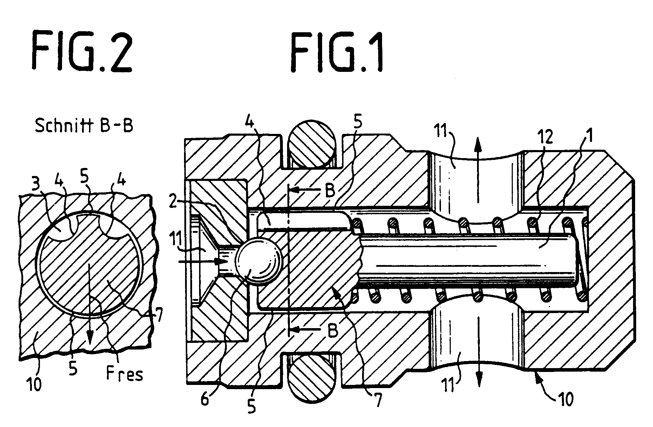

Figur 1 zeigt eine Ausführungsform eines als Überdruckventil wirkenden Ventils, in dem ein in einem Ventilgehäuse 10 desachsierbar geführter Ventilstößel 1 im Bereich des Stößelkopfes 7 mit am Umfang asymmetrisch druckbeaufschlagten Führungsflächen versehen ist. Diese Führungsflächen 5 sind durch hohlkehlenförmigen Nuten unterbrochen, damit bei Freigabe des Strömungsquerschnittes 3 das Fluid in die angrenzenden Druckmittelkanäle 11 einströmen kann. Der Ventilstößel 1 weist an dem dem Ventilschließglied 6 abgewandten Schaftende eine Ventilfeder 12 auf, deren Vorspannkraft auf den zu steuernden Überdruck abgestimmt ist. Bei Erreichen des festgelegten Steuerdruckes öffnet das als Kugelsitzventil konzipierte Ventilschließglied 6 den Strömungsquerschnitt, so daß Druckmittel aus dem Betriebssystem abgelassen werden kann. Im Gegensatz zum Ventilstößel 1 mit Querverlagerungseffekt neigt der konventionelle Ventilstößel während der Ventilöffnungsphasen zu Radialschwingungen, so daß durch die impulsartige radiale Kontaktierung der Führungsflächen an der Ventilgehäusewand Geräusche entstehen, die als störend empfunden werden.

Die Figur 2 zeigt den Querschnitt B-B der erfindungsgemäßen Ausbildung des Stößelkopfes 7, der anstelle einer symmetrischen eine asymmetrische Verteilung der Ausnehmungen 4 über den Umfang aufweist. Folglich kann nach Freigabe des Strömungsquerschnittes 3 zwischen dem Ventilschließglied 6 und dem Ventilsitz 2 das Druckmittel über die beiden abbildungsgemäßen Ausnehmungen 4 strömen, wodurch in Folge der asymmetrischen Druckbeaufschlagung des Stößelkopfes 7 eine Druckkraftresultierende F res für eine exzentrische Ausrichtung des Stößelkopfes 7 an der den Ausnehmungen 4 entgegengesetzten Führungsfläche 5 zum Ventilgehäuse 10 hin sorgt. Somit ist auf funktionsgerechte Weise eine Lösung des Geräuschproblems gefunden, die unter Verwendung einfacher Mittel Radialschwingungen ausschließt.

### Bezugszeichenliste

- 1: Ventilstößel
- 2: Ventilsitz
- 3: Strömungsquerschnitt
- 4: Ausnehmungen
- 5: Führungsflächen
- 6: Ventilschließglied
- 7: Stößelkopf
- 10: Ventilgehäuse
- 11: Druckmittelkanäle
- 12: Ventilfeder
- Fres: Druckkraftresultierende

## Patentansprüche

1. Ventil für schlupfgeregelte hydraulische Bremsanlagen, mit einem Ventilsitz (2), der ein Ventilschließglied (6) aufnimmt, mit einem am Ventilschließglied (6) angebrachten Ventilstößel (1), der axial beweglich in einem Ventilgehäuse (10) geführt ist, sowie mit einem zwischen dem Ventilstößel (1) und dem Ventilsitz (2) steuerbaren Strömungsquerschnitt (3), der mit den das Ventilgehäuse (10) durchdringenden Druckmittelkanälen (11) in Verbindung steht, dadurch **gekennzeichnet**, daß der Ventilstößel (1) gegenüber dem Ventilsitz (2) unter Einwirkung einer Querkraft definierter Größe radial verlagerbar ist, wobei der Strömungsguerschnitt (3) eine asymmetrische Durchtrittsfläche aufweist, daß an einem von einer Ventilfeder (12) belasteten Schaftende des Ventilstößels (1) ein das Ventilschließglied (6) aufnehmender Stößelkopf (7) angebracht ist, daß am Umfang des Stößelkopfes (7) Führungsflächen (5) asymmetrisch angeordnet sind, die von nutförmigen Ausnehmungen (4) unterbrochen sind, daß sich die nutförmigen Ausnehmungen (4) zwischen den Führungsflächen (5) am Stößelkopf (7) axial erstrecken, wobei zur Erzeugung einer Druckkraftresultierenden (Fres) die asymmetrische Durchtrittsfläche für das Fluid an einem Abschnitt des hydraulisch beaufschlagbaren und exzentrisch ausrichtbaren Stößelkopfs (7) vorgesehen ist, der die nutförmigen Ausnehmungen (4) aufweist.

2. Ventil nach Anspruch 1, dadurch **gekennzeichnet**, daß sich die asymmetrisch verteilten Ausnehmungen (4), als hohlkehlenförmige Nuten ausgebildet, zwischen Führungsflächen (5) des Ventilstößels (1) axial erstrecken.

3. Ventil nach 1 oder 2, dadurch **gekennzeichnet**, daß an der dem Ventilsitz (2) zugewandten Seite des Ventilstößels (1) ein Ventilschließglied (6) als Kugelsitzventil ausgebildet ist, das zusammen mit den asymmetrisch angeordneten Ausnehmungen (4) den das Strömungsvolumen steuernden Stößelkopf (7) bildet.

4. Ventil nach Anspruch 3, dadurch **gekennzeichnet**, daß das Ventilschließglied (6) ein bereits weit stromaufwärts den Umschlagpunkt der Strömung von laminar in turbulent bestimmendes Oberflächenprofil aufweist.

5. Ventil nach einem der vorhergehenden Ansprüche 3 bis 4, dadurch **gekennzeichnet**, daß das Oberflächenprofil eine Kugelgestalt besitzt, wobei die Oberflächenrauhigkeit beeinflussende Kraterfelder vorgesehen sind, die den Turbulenzgrad der Strömung im Bereich des Ventilschließgliedes (6) bestimmen.

6. Ventil nach Anspruch 3 bis 5, dadurch **gekennzeichnet**, daß das Ventilschließglied (6) eine radial verlaufende, schmale Ringzone (9) hoher Oberflächengüte aufweist, die in der Schließstellung des Ventilstößels (1) auf dem Ventilsitz (2) dichtend zur Anlage gelangt.

## Claims

1. A valve for slip-controlled hydraulic brake systems, comprising a valve seat (2) accommodating a valve closure member (6), comprising a valve tappet (1) fitted to the valve closure member (6) and guided axially movably in a valve housing (10), as well as including a flow cross-section (3) controllable between the valve tappet (1) and the valve seat (2) and being in communication with the pressure-fluid channels (11) which penetrate the valve housing (10),
**characterised** in that the valve tappet (1) is radially displaceable relative to the valve seat (2) under the action of a transverse force of a defined magnitude, the flow cross-section (3) comprising an asymmetric penetration surface, in that at one stem end of the valve tappet (1) loaded by a valve spring (12) a tappet head (7) accommodating the valve closure member (6) is incorporated, in that at the periphery of the tappet head (7) guiding surfaces (5) are arranged asymmetrically which are interrupted by groove-shaped recesses (4), in that the groove-shaped recesses (4) extend axially between the guiding surfaces (5) at the tappet head (7), and for producing a pressure force resultant (Fres) the asymmetric penetration surface for the fluid being provided at a portion of the hydraulically applicable and eccentrically alignable tappet head (7) which comprises the groove-shaped recesses (4).

2. A valve as claimed in claim 1,
**characterised** in that the asymmetrically distributed recesses (4) which are provided as grooves of cavetto-type design extend in axial direction between guiding surfaces (5) of the valve tappet (1).

3. A valve as claimed in claim 1 or 2,
**characterised** in that on the side of the valve tappet (1) close to the valve seat (2) a valve closure member (6) is provided as a spherical seat valve which, in conjunction with the asymmetrically arranged recesses (4), forms the tappet head (7) governing the volume of fluid flow.

4. A valve as claimed in claim 3,
**characterised** in that the valve closure member (6) has a surface profile which determines the point of shift-over of the flow from laminar to turbulent already at a location far upstream.

5. A valve as claimed in any one of the preceding claims 3 to 4,
**characterised** in that the surface profile is of spherical configuration, there being provision of fields of craters which influence the surface roughness and determine the degree of turbulence of the flow in the area of the valve closure member (6).

6. A valve as claimed in claims 3 to 5,
**characterised** in that the valve closure member (6) includes a radially extending small annular zone (9) of high surface precision which moves into sealing abutment on the valve seat (2) in the closed position of the valve tappet (1).

## Revendications

1. Soupape pour des installations de freinage hydrauliques à régulation du glissement, comportant un siège de soupape (2) qui loge un élément (6) de fermeture de la soupape, un poussoir de soupape (1) monté sur l'élément (6) de fermeture de la soupape et qui est guidé de manière à être déplaçable axialement dans un boîtier de soupape (10), ainsi qu'une section d'écoulement (3) qui peut être commandée entre le poussoir de soupape (1) et le siège de soupape (2) et qui est reliée aux canaux (11) véhiculant un fluide sous pression et traversant le boîtier à soupapes (10), caractérisée en ce que le poussoir de soupape (1) peut être déplacé radialement par rapport au boîtier de soupape (2) sous l'action d'une force transversale d'intensité définie, la section transversale d'écoulement (3) comportant une surface dissymétrique de passage, en ce qu'une tête (7), qui loge l'élément (6) de fermeture de la soupape, est montée sur une extrémité, qui est chargée par un ressort de soupape (12), du poussoir de soupape (1), en ce que sur la périphérie de la tête (7) du poussoir sont disposées, d'une manière dissymétrique, des surfaces de guidage (5) qui sont interrompues par des évidements en forme de rainures (4), en ce que les évidements en forme de rainures (4) s'étendent axialement entre les surfaces de guidage (5) sur la tête (7) du poussoir, et en ce que, pour l'obtention d'une résultante (Fres) de la force de pression, la surface dissymétrique de passage pour le fluide est prévue au niveau d'une section de la tête (7) du poussoir, qui peut être chargée hydrauliquement et peut être orientée d'une manière excentrée et qui possède les évidements en forme de rainures (4).

2. Soupape selon la revendication 1, caractérisée en ce que les évidements (4), qui sont répartis de façon dissymétrique et sont agencés sous la forme de rainures en forme de gorges, s'étendent axialement entre des surfaces de guidage (5) du poussoir de soupape (1).

3. Soupape selon la revendication 1 ou 2, caractérisée en ce que sur le côté tourné vers le siège de soupape (2) du poussoir de soupape (1), un élément (6) de fermeture de la soupape est réalisé sous la forme d'un obturateur à siège sphérique qui forme, avec les évidements dissymétriques (4), la tête (7) du poussoir qui commande le volume d'écoulement.

4. Soupape selon la revendication 3, caractérisée en ce que l'élément (6) de fermeture de la soupape possède un profil de surface qui détermine déjà dans une large mesure, en amont, le point de commutation de l'écoulement de l'état laminaire à l'état turbulent.

5. Soupape selon l'une des revendications précédentes 3 à 4, caractérisée en ce que le profil de surface possède une configuration sphérique, et il est prévu des zones de cratères qui influent sur la rugosité de surface et déterminent le degré de turbulence de l'écoulement au voisinage de l'élément (6) de fermeture de la soupape.

6. Soupape selon les revendications 3 à 5, caractérisé en ce que l'élément (6) de fermeture de la soupape possède une zone annulaire étroite radiale (9) possédant une qualité de surface élevée et qui vient s'appliquer de façon étanche contre le siège de soupape (2) lorsque le poussoir de soupape (1) est dans la position fermée.
